# EUROPEAN PATENT APPLICATION

(11) **EP 2 078 603 A1**
(43) Date of publication of application: **15.07.2009**
(21) Application number: 09000096.9
(22) Date of filing: 07.01.2009
(51) Int. Cl.: B29C 59/04, B29C 35/08

(54) **Method of manufacturing patterned resin sheet**

(30) Priority: 09.01.2008 JP 2008002175; 07.10.2008 JP 2008260488
(71) Applicant: Nitto Denko Corporation, Ibaraki-shi, Osaka 567-8680 (JP)
(72) Inventor: Matsuo, Naoyuki, Ibaraki-shi Osaka 567-868 (JP); Hino, Atsushi, Ibaraki-shi Osaka 567-8680 (JP)
(74) Representative: Stolmár, Matthias

(57) **Abstract**

The present invention aims at providing a method of manufacturing a patterned resin sheet (5), capable of implementing efficient and highly precise patterning. The method includes: pressing a perimeter portion (1a) of a roller against a surface of a resin sheet (2) with the perimeter portion (1a) heated with a laser beam (4a), by using a patterning member (1) that includes a roller rotatable around an axis and has a patterning portion patterned in a recessed and projected geometry on the perimeter portion (1a) of the roller, thereby forming on the surface of the resin sheet (2) a pattern that is oriented inversely to the recessed and projected geometry of the patterning portion; and rotating the roller to bring a portion pressed by the perimeter portion into motion, such that the pattern is continuously formed on the surface of the resin sheet.

## Description

### BACKGROUND OF THE INVENTION

### Field of the Invention

The present invention relates to a method of manufacturing a patterned resin sheet having a recessed and projected shape on its surface.

### Description of the Related Art

Conventionally, various kinds of patterning with minute recesses and projections are performed on surfaces of resin sheets to give decorative or functional values thereto, and the surface-patterned resin sheets (patterned resin sheets) are fabricated, e.g., using patterning members.

For example, the fabrication is carried out using a patterning member that is made of, e.g., a resin having a higher melting point than the constituent resin of the resin sheet, or a metal, and that has a surface patterned in a recessed and projected geometry which is inverse to the pattern to be formed on the resin sheet.

The patterning member, such as a metal mold, is heated to a temperature equal to or above, e.g., a glass transition point of the constituent resin of the resin sheet and is pressed against the resin sheet, whereby the projections on the surface of the patterning member are impressed into the resin sheet to create recesses on a surface of the resin sheet, as well as projections fitting to the recesses on the patterning member, thereby manufacturing a patterned resin sheet having a surface patterned in a recessed and projected geometry that is inverse to the surface profile of the metal mold.

The above method is also employed in the fabrication of a so-called embossed sheet having a surface substantially entirely patterned in a minutely recessed and projected geometry. In the fabrication of the embossed sheet, a pattern is transferred from a metal mold on only one side of the sheet or on both sides of the sheet.

For example, in fabricating an embossed sheet with both sides patterned, a flexible member is used to hold a rear surface of a resin sheet, permitting projections on a surface of a heated patterning member to be impressed into the resin sheet, so that recesses are formed on a top surface of the resin sheet, while the recesses are projected out at their rear surface side; in this manner, projections are created on portions of the top surface that have been located corresponding to the recesses of the patterning member, whereas recesses are created at the rear surface side of the projections.

In the fabrication of a patterned resin sheet like this embossed sheet, the patterning member is heated by an electrically-heated wire disposed in the metal mold or by means of circulation of a heat medium, such as hot steam or oil, through the metal mold. Accordingly, the method has difficulty in accurately controlling the surface temperature of the patterning member, and hence in improving the precision of patterning.

In the case of using a resin mold, entirely heating the mold accelerates deterioration of the mold, leading to a shortened life of the mold.

To deal with the problems, Japanese Unexamined Patent Publication No. 2003-311831 describes that a resin sheet is placed on a planar metal mold having on its surface a patterning portion with a pattern to be transferred, and the resin sheet is pressed by a transparent member such as a glass plate to be subjected to pressing of the surface of the metal mold; along therewith, a laser beam is applied through the transparent member and the resin sheet onto the metal mold surface for heating, and further the laser beam is run all over the metal mold surface, thereby patterning the surface of the resin sheet.

In the fabrication of a patterned resin sheet according to the patterning method described in Japanese Unexamined Patent Publication No. 2003-311831, use of a laser beam enables the planar metal mold to be heated mainly on its top surface, which is easier in terms of temperature control on the top surface as compared with the case of heating the entire metal mold, thus allowing the patterns to be formed precisely.

Meanwhile, the fabrication of a patterned resin sheet according to the patterning method described in Japanese Unexamined Patent Publication No. 2003-311831 involves a plurality of batch patterning processes for patterning a resin sheet that is larger than the planar metal mold, which may invite lowering of productivity.

In other words, the conventional method of manufacturing a patterned resin sheet entails difficulty in performing efficient and highly precise patterning.

### SUMMARY OF THE INVENTION

An object of the present invention is to provide a method of manufacturing a patterned resin sheet capable of effecting efficient and highly precise patterning.

In order to overcome the foregoing problems, the present invention provides a method of manufacturing a patterned resin sheet, including the steps of: pressing a perimeter portion of a roller against a surface of a resin sheet with the perimeter portion heated with a laser beam, by using a patterning member that includes a roller rotatable around an axis and has a patterning portion patterned in a recessed and projected geometry on the perimeter portion of the roller, thereby forming on the surface of the resin sheet a pattern that is oriented inversely to the recessed and projected geometry of the patterning portion; and rotating the roller to bring a portion pressed by the perimeter portion into motion, such that the pattern is continuously formed on the surface of the resin sheet.

According to the present invention, since the perimeter portion of the roller provided with a patterning portion is heated with a laser beam, the surface temperature can be accurately controlled as the roller is pressed against the resin sheet.

Moreover, the roller is rotated to bring the portion pressed by the perimeter portion into motion, whereby the surface of the resin sheet is continuously patterned, thus enhancing production efficiency.

That is, efficient and highly precise patterning can be performed.

### BRIEF DESCRIPTION OF THE DRAWINGS

- FIG. 1: is a side view showing an apparatus used for manufacturing a patterned resin sheet;
- FIG. 2: is a side view showing another apparatus used for manufacturing a patterned resin sheet;
- FIG. 3: is a side view showing another apparatus used for manufacturing a patterned resin sheet;
- FIG. 4: is a side view showing another apparatus used for manufacturing a patterned resin sheet;
- FIG. 5: is a side view showing another apparatus used for manufacturing a patterned resin sheet;
- FIG. 6: is a side view showing another apparatus used for manufacturing a patterned resin sheet;
- FIG. 7: is a side view showing another apparatus used for manufacturing a patterned resin sheet;
- FIG. 8: is a side view showing another apparatus used for manufacturing a patterned resin sheet; and
- FIG. 9: is a photograph captured by a scanning electron microscope for observation of a surface of a patterned resin sheet produced by a manufacturing method according to Example 1.

### DESCRIPTION OF THE PREFERRED EMBODIMENTS

Preferred embodiments of the present invention are described below in connection with an example in which a roller with a perimeter portion patterned in a recessed and projected geometry is used to pattern a resin sheet for fabricating an embossed sheet (patterned resin sheet).

First, a description is given on a patterning apparatus and a resin sheet for use in a method of manufacturing an embossed sheet according to the present embodiment.

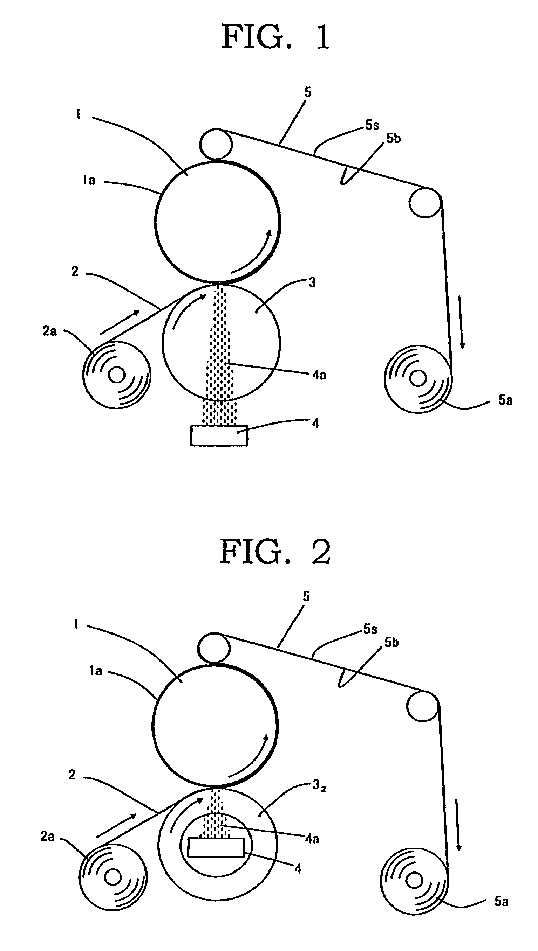

FIG. 1 is a side view showing a first patterning apparatus for use in the embossed sheet manufacturing method.

In FIG. 1, an embossing roller 1, which serves as a patterning member in the embossed sheet manufacturing method according to the present embodiment, generally has a substantially columnar shape and is provided in the patterning apparatus with its rotation axis extending horizontally so as to be rotatable about the rotation axis by means of a driver (not shown).

In FIG. 1, a patterning portion 1a is made to have a recessed and projected geometry and is disposed along a perimeter portion of the embossing roller 1. The embossing roller 1 is provided on its entire perimeter with a recessed and projected geometry that constitutes a pattern.

That is, the patterning portion 1a is provided throughout the entire perimeter of the embossing roller 1.

Although not particularly limited, the material for the embossing roller 1 is preferably hardly transparent and reflective to laser beams (i.e., highly absorptive of laser beams) so that the surface temperature can be raised efficiently when the surface is irradiated with a laser beam, and exemplary materials include metals and resin compositions.

For example, it is possible to use a metal roller whose surface is treated to be highly absorptive of laser beams, or a translucent or opaque resin roller made of a polyimide resin or an aromatic polyamide resin.

The recessed and projected geometry on the surface of the embossing roller 1 and the overall pattern to be formed with the recessed and projected geometry are not particularly limited, and a desired recessed and projected geometry and a desired pattern may be adopted.

For example, although depending on the thickness of the embossed sheet to be fabricated, it is possible to use an embossing roller 1 provided with recesses and projections that have a height on the order of tens of nanometers to several millimeters as well as a shape of a lens, pyramid, stripe, or pillar.

According to the present invention, since the shape can be replicated precisely on the patterned resin sheet, the advantages of the invention are pronounced particularly in the case of using an embossing roller provided with a minute pattern of not more than 10 µm in height.

In FIG. 1, the embossing roller 1 forms on a resin sheet 2 a pattern that is oriented inversely to the recessed and projected geometric pattern on the patterning portion 1a that is provided along the perimeter of the embossing roller 1.

The resin sheet 2 of the present embodiment has, e.g., an elongated belt-like shape having as long a length as several hundreds of meters, and the elongated belt-like resin sheet 2 is wound into a resin sheet web 2a.

The resin sheet web 2a is mounted on a rotation shaft that extends parallel to the rotation axis of the embossing roller 1 to be fed to the embossing roller 1 and manufactured into an embossed sheet.

Although the material and thickness of the resin sheet 2 are not particular limited, in the method of manufacturing a patterned resin sheet according to the present embodiment, the sheet for use typically has a width narrower than the length of the embossing roller 1, and in the case where a resin roller is used for the embossing roller 1, the sheet for use is typically made of a resin that has a lower melting point than the constituent resin material of the embossing roller 1.

For example, it is possible to use a resin sheet that is made of a polyolefin resin, e.g., a polyethylene resin or a polypropylene resin, and has a thickness of several micrometers to several millimeters.

In FIG. 1, a nip roller 3 is provided to hold the resin sheet 2 in conjunction with the embossing roller 1 to press the surface of the embossing roller 1 against a surface of the resin sheet 2. The nip roller 3 has a columnar shape that is substantially the same as that of the embossing roller 1, and is disposed in the patterning apparatus at the lower side of the embossing roller 1 with its rotation axis parallel to the rotation axis of the embossing roller 1.

That is, the nip roller 3 is disposed in the patterning apparatus such that the nip roller 3 and the embossing roller 1 mutually form a linear portion of tangency therebetween along the entire longitudinal lengths of the rollers when being abutted against each other.

The nip roller 3 is pressed against the embossing roller 1 so that a suitable nip width is afforded to the linear portion of tangency with the embossing roller 1. An elastic body such as rubber or a metal material constitutes the surface of the nip roller 3.

Further, the nip roller 3 is not only transparent to laser beams but also passes the laser beams therethrough almost without energy attenuation. The entirety of the nip roller 3 is constituted by a transparent body.

A laser source 4 emits laser beams 4a, which is schematically illustrated in FIG. 1.

The laser source 4 is disposed below the nip roller 3 in the patterning apparatus so as to emit the laser beams 4a upward.

That is, the laser source 4 is operatively disposed in the patterning apparatus to emit a line beam with the resin sheet 2 held between the embossing roller 1 and the nip roller 3, thereby irradiating the surface of the embossing roller 1 with the laser beam 4a transmitted through the nip roller 3 and the resin sheet 2.

Further, the laser source 4 emits the laser beam 4a in the form of a line beam that impinges on the irradiation target linearly, and the laser source 4 is so disposed in the patterning apparatus as to emit the laser beam 4a in a way the portion irradiated with the line beam extends within and along the linear portion of tangency between the embossing roller 1 and the nip roller 3.

The laser beams emitted from the laser source 4 may be, but not particularly limited to, e.g., an infrared laser, an ultraviolet laser, or a visible-light laser that is appropriately selected according to the material and the like of the resin sheet to be patterned (embossed).

As has been described above, in the case of irradiating the surface of the embossing roller 1 with a laser beam transmitted through the nip roller 3 and the resin sheet 2, it is preferable that the laser beam not be absorbed in the resin sheet 2 or the nip roller 3, and typically a near-infrared laser having a main light wavelength of 0.7 µm to 2.5 µm can be suitably used.

Preferably, the wavelength of the laser beam and the material of the nip roller 3 are appropriately selected such that the embossing roller 1 is more absorptive than the resin sheet 2 and the nip roller 3 with respect to the main peak wavelength of the emitted laser beam.

Also, a semiconductor laser source is suitably used as the laser source 4 because of its ability to produce line beams easily.

In FIG. 1, an embossed sheet 5 with its surface patterned (patterned resin sheet) comes out of the nip between the embossing roller 1 and the nip roller 3, the embossed sheet 5 having a top surface 5s that has been pressed by the embossing roller 1 and a rear surface 5b that has been pressed by the nip roller 3.

The top surface 5s of the embossed sheet 5 is provided with a pattern that is oriented inversely to the recessed and projected geometry of the embossing roller 1, whereas the rear surface 5b of the embossed sheet 5 is provided with a pattern that is oriented in the same direction as the recessed and projected geometry on the surface of the embossing roller 1.

In FIG. 1, the embossed sheet 5 is taken up into an embossed sheet web 5a. The embossed sheet web 5a is mounted on a rotation shaft extending parallel to the rotation axis of the embossing roller 1, so as to take up the embossed sheet 5 delivered from the embossing roller 1.

Although not described in detail herein, not only a two-sided embossed sheet with both the sides patterned as described above but also a one-sided embossed sheet with a patterned surface and a flat rear surface is to be encompassed by the scope of the present invention. According to the present invention, since it is possible to efficiently heat only the interface with the embossing roller and the portion therearound, a one-sided embossed sheet with little distortion can be obtained.

Components other than the above of the patterning apparatus for use in the patterned resin sheet manufacturing method according to the present embodiment may take structures adopted in conventionally known patterning apparatuses.

Also, structures adopted in conventionally known patterning apparatuses may be substituted for the above-described structures insofar as the effects of the present invention are not impaired.

For example, in the above-described patterning apparatus, line beams are used because of its capability of allowing the nip to be irradiated with a laser beam at a time and of suppressing variation in temperature at the nip, to attain highly precise patterning; however, a spot laser or a focused laser may also be used instead of line beams so as to run the portion to be irradiated with the laser beam along the nip.

A description is given next on the patterning apparatus as described above and a method of manufacturing an embossed sheet 5 from a resin sheet 2 (a method of manufacturing a patterned resin sheet).

First, the distance between the rotation axes of the embossing roller 1 and the nip roller 3 is adjusted to provide suitable nipping pressure at the portion of tangency between the embossing roller 1 and the nip roller 3, whereon the embossing roller 1 is rotated by the driver.

Then, the rotation of the embossing roller 1 by means of the driver causes the nip roller 3 that is pressed against the embossing roller 1 to rotate such that the directions and speeds of the rotational movement are matched between the surfaces of the nip roller 3 and of the embossing roller 1 at the portion of tangency.

Further, the resin sheet 2 is fed from the resin sheet web 2a so as to pass through the nip between the embossing roller 1 and nip roller 3 that are being rotated.

In addition, a line beam is emitted to the portion of tangency between the embossing roller 1 and the nip roller 3 from the laser source 4 while the resin sheet 2 is being passed through the nip between the embossing roller 1 and the nip roller 3.

At this point, the resin sheet 2 is pressed against the perimeter of the embossing roller 1 that has undergone heating with the line beam as the resin sheet 2 passes through the nip between the embossing roller 1 and the nip roller 3, whereby the projections in the recessed and projected geometry on the patterning portion 1a of the embossing roller 1 are impressed into the resin sheet 2 to form recesses on the top surface thereof.

The nip roller 3 elastically deforms at the rear side of the recesses, so that the recesses created on the top surface of the resin sheet 2 are projected out at their rear surfaces, thereby creating the projections.

Meanwhile, the recesses in the recessed and projected geometry on the perimeter of the embossing roller 1 are pressed onto the top surface of the resin sheet 2 to form projections thereon, while recesses are formed at the rear side of the projections through pressing of the nip roller 3.

In this manner, the embossed sheet 5 is continuously fabricated with its top and rear surfaces patterned in recessed and projected geometries.

The continuously fabricated embossed sheet 5 is taken up into the embossed sheet web 5a that is being rotated about the rotation shaft on which the embossed sheet web 5a is mounted.

In the method of manufacturing an embossed sheet according to the present embodiment, the line beam emitted from the laser source 4 is applied through the nip roller 3 and the resin sheet 2 onto the perimeter of the embossing roller 1, hence allowing only a portion proximate to the surface of the embossing roller1 to be heated efficiently, and facilitating the control over the surface temperature.

Accordingly, for example, application of the line beam is performed while the output thereof is controlled such that the surface temperature of the embossing roller 1 is kept within the temperature range from a glass transition temperature to a melting point of the constituent resin material of the resin sheet 2; in this manner, fabrication of the embossed sheet 5 can be effected while obviating too much softening of the resin sheet 2 resulting in difficulty in ensuring a predetermined thickness, or insufficient softening of the resin sheet 2 resulting in incomplete formation of the recessed and projected geometries.

That is, the patterns provided on the surface of the embossing roller 1 can be replicated highly precisely on the top surface 5s of the embossed sheet 5.

It should be noted that, in the case where the laser is emitted from the rear side of the nip roller 3, use of a glass nip roller enables correction of wobbles in the direction of laser beam radiation by the action of refraction and the like.

For example, if the laser source 4 is disposed on an extension of a straight line passing through the nip and the central axis of the nip roller, the laser beam is typically incident on the nip roller at a right angle with respect to the tangential direction to the circumference of the nip roller when impinging on the nip. Even when vibration and the like cause deviation in the radiation direction from the direction toward the nip, which could cause the laser beam to be incident on the nip roller at an angle, the radiation can be positionally corrected into the direction toward the nip via refraction.

Moreover, e.g., according to the conventional method using a planar metal mold, it is difficult to apply pressure locally, and the method therefore necessitates softening of the entire resin sheet for performing patterning; for this reason, the entire surface of the metal mold needs to be heated through laser beam running over the entire surface of the metal mold. Accordingly, as the patterning area on the resin sheet increases, the surface temperature of a portion that has been heated initially falls during the laser beam running, which makes it difficult to create a recessed and projected geometry at a high degree of accuracy.

While it is possible to create a recessed and projected geometry on the resin sheet at a high degree of accuracy by increasing the duration of laser application for each portion or by performing laser beam running a plurality of times to heat the entirety, in such a case, the resin sheet tends to become softened not only at the surface to be joined with the metal mold but also at the rear surface thereof, which hinders removal of the pattered resin sheet from the metal mold until the sheet cools down, thus significantly compromising the productivity.

Particularly, in a highly crystalline resin, phase change in the vicinity of the melting point is sudden and transition from a solid state to a molten state where viscosity is low takes place at a stretch. It is therefore hard for the conventional method using a planar metal mold to be used on a thin resin sheet (i.e., having generally small thermal capacity) made of a highly crystalline resin for performing patterning thereon.

Particularly, when the method using a planar metal mold is applied to the formation of a minute pattern of not more than 10 µm in height over a large area, the patterned resin sheet may adhere firmly to the metal mold surface due to an anchor effect and the like, resulting in inability to be removed from the metal mold.

To address the problem, a roller (embossing roller 1) is used as the patterning member in the embossed sheet manufacturing method according to the present embodiment, and the portion pressed by the roller (the nip) is therefore formed linearly, which allows the heating for patterning to be concentrated into a small area and minimizes trouble in mold release.

Accordingly, the recessed and projected geometry of the patterning portion provided on the perimeter of the embossing roller 1 can be transferred onto the resin sheet 2 highly precisely to fabricate the embossed sheet 5.

And besides, the method enables continuous manufacturing, so that high production efficiency can be achieved for fabrication of the embossed sheet 5.

Also, for example, according to the conventional method using a planar metal mold, while the recessed and projected geometry of the metal mold can be reflected to a certain degree on the side where the metal mold contacts, it is substantially impossible to pattern a recessed and projected geometry that is oriented in the same direction as that provided on the metal mold surface, on the rear surface side backed by a transparent member such as a glass plate.

Meanwhile, in the embossed sheet manufacturing method according to the present embodiment, both the embossing roller 1 and the nip roller 3 are used, and only the nip therebetween is irradiated with a laser beam to heat the embossing roller 1. Thus, adjustment can be made on the nipping pressure and the laser beam output, allowing the surface geometry of the embossing roller 1 to be reproduced easily into the recessed and projected geometry of the rear surface 5b of the embossed sheet 5.

That is, the embossed sheet manufacturing method according to the present embodiment is suitable for fabrication of an embossed sheet provided on its rear surface with a pattern that is recessed and projected in the same direction as that of the patterning portion.

Furthermore, for example, in the case where the conventional method using a planar metal mold is applied to the fabrication of an embossed sheet having a larger area than the metal mold, seams are liable to be produced, within which seams the pattern are prone to crush; on the other hand, the embossed sheet manufacturing method according to the present embodiment is capable of suppressing such crush in the pattern, thus providing an aesthetically pleasing embossed sheet.

It should be noted that the present invention is not limited to the method of manufacturing a patterned resin sheet using a patterning apparatus as described above.

For example, patterning apparatuses illustrated in FIGS. 2 to 8 may also be used in the patterned resin sheet manufacturing method according to the present invention.

FIGS. 2 to 8 are side views of patterning apparatuses like FIG. 1, and similar or identical structures are given the same reference numerals throughout the drawings.

A patterning apparatus illustrated in FIG. 2 has the same structure as that of the patterning apparatus illustrated in FIG. 1 except that a hollow cylindrical nip roller 3₂ is provided and the laser source 4 is disposed in the hollow of the nip roller 3₂.

In the patterning apparatus illustrated in FIG. 2, the section through which a line beam from the laser source 4 is transmitted is shortened in the nip roller, which suppresses energy attenuation of the laser beam caused by being absorbed in the nip roller 3₂.

Hence, the apparatus advantageously opens up a wider range of selection for the constituent material of the nip roller 3₂.

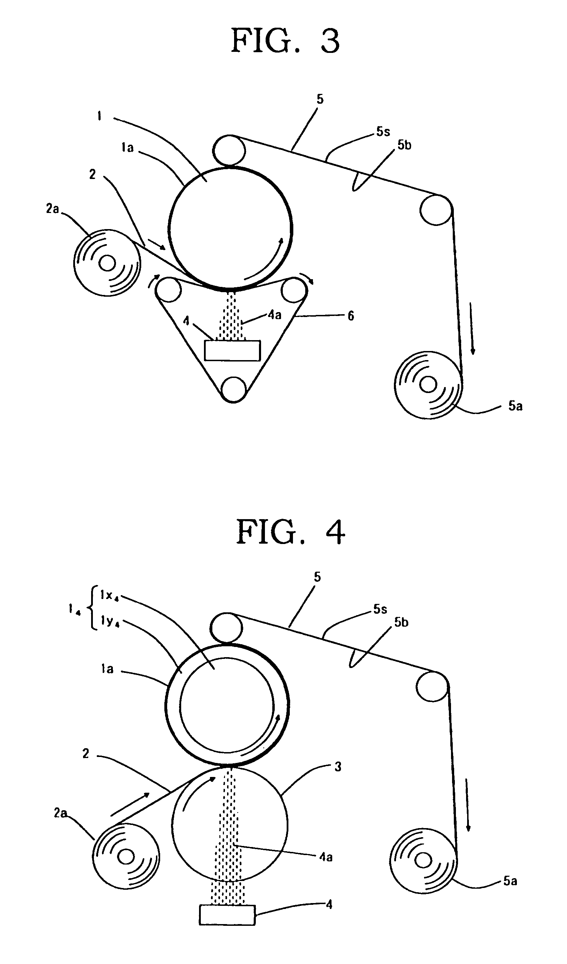

A patterning apparatus illustrated in FIG. 3 is similar to the patterning apparatus illustrated in FIG. 2 in that an endless belt 6 is used instead of the hollow cylindrical nip roller 3₂.

The belt 6 can typically have a smaller thickness than the nip rollers 3 and 3₂, and the patterning apparatus illustrated in FIG. 3 is thus capable of even further suppressing energy attenuation of the line beam emitted from the laser source 4 before the beam reaches the perimeter (patterning portion 1a) of the embossing roller 1.

A patterning apparatus illustrated in FIG. 4 is different from the patterning apparatus illustrated in FIG. 1 in that an embossing roller 1₄ includes an inner roller portion 1x₄ constituting an inner peripheral portion of the roller and an external cylindrical portion 1y₄ for providing a perimeter portion including the patterning portion 1a, and in that the external cylindrical portion 1y₄ is detachable from the inner roller portion 1x₄.

Accordingly, the patterning apparatus illustrated in FIG. 4 advantageously enables fabrication of embossed sheets 1 having different patterns not by changing the entire embossing roller 1₄ but simply by replacing the external cylindrical portion 1y₄.

As in the mode shown in FIG. 4, for example, the embossing roller 1₄ may be constructed to be separable into a sheet-like member constituting the patterning portion 1a and a cylindrical inner roller portion 1x₄ wound with the sheet-like member, the surface of the sheet-like patterning portion 1a being patterned in a recessed and projected geometry, whereby, for example, the pattern can be switched to another immediately, and even when, e.g., damage is caused on the patterning portion 1a, not the entire embossing roller but the patterning portion alone needs to be changed, so that the apparatus can be used economically.

Particularly in the case where the patterning portion 1a is formed of a resin composition that has a higher melting point than the resin sheet to be patterned, as compared with the case in which the embossing roller is constructed of a metal roller having a surface patterned in a recessed and projected geometry, the high-melting resin sheet that constitutes the patterning portion 1a can be fabricated easily, and the cost for manufacturing the embossing roller 1₄ can be saved accordingly.

In addition, being easily repairable even if the surface is damaged, the embossing roller can be handled without the need of going through a delicate process.

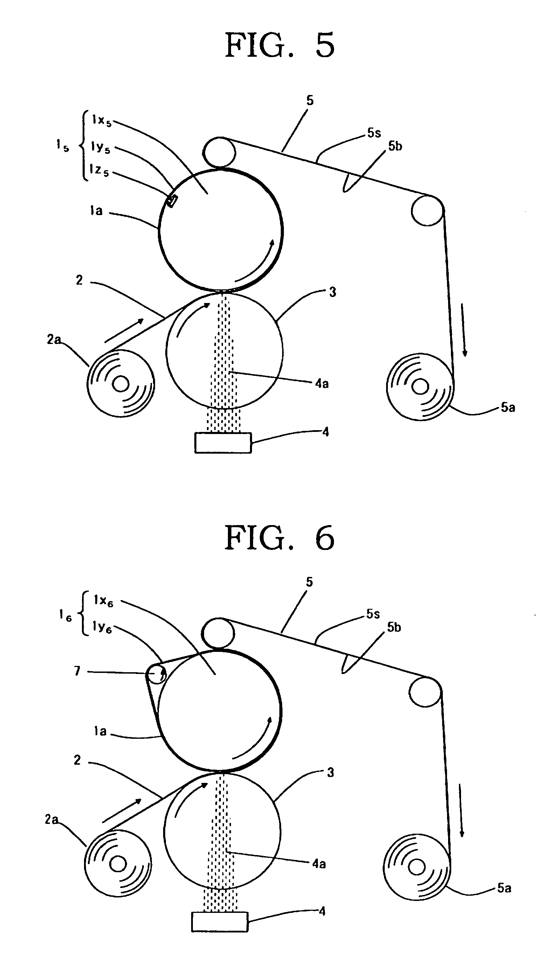

It should be noted that, like a patterning apparatus illustrated in FIG. 5, it is possible to construct an embossing roller 1₅ from a member that is highly absorptive of laser beams instead of the external cylindrical portion 1y₄ of FIG. 4, by using a blanket 1y₅ having on its surface a patterning portion in such a way that the blanket 1y₅ is wound around the perimeter of an inner roller portion 1x₅ provided with a slit 1z₅ that can fixedly receive both the edges of the blanket 1y₅ with a locking piece.

Moreover, as shown in FIG. 6, provided instead of the external cylindrical portion 1y₄ of FIG. 4 is an elastic sleeve 1y₆ that has such an inner diameter as to permit loose fit to an inner roller portion 1x₆, that is highly absorptive of laser beams, and that has an outer surface patterned in a recessed and projected geometry; the elastic sleeve 1y₆ may be brought into tight contact with the perimeter of the inner roller portion 1x₆ by means of a tension roller 7, so as to be used as an embossing roller 1₆ having on its perimeter a patterning portion 1a patterned in a recessed and projected geometry, which is also to be encompassed by the scope of the present invention.

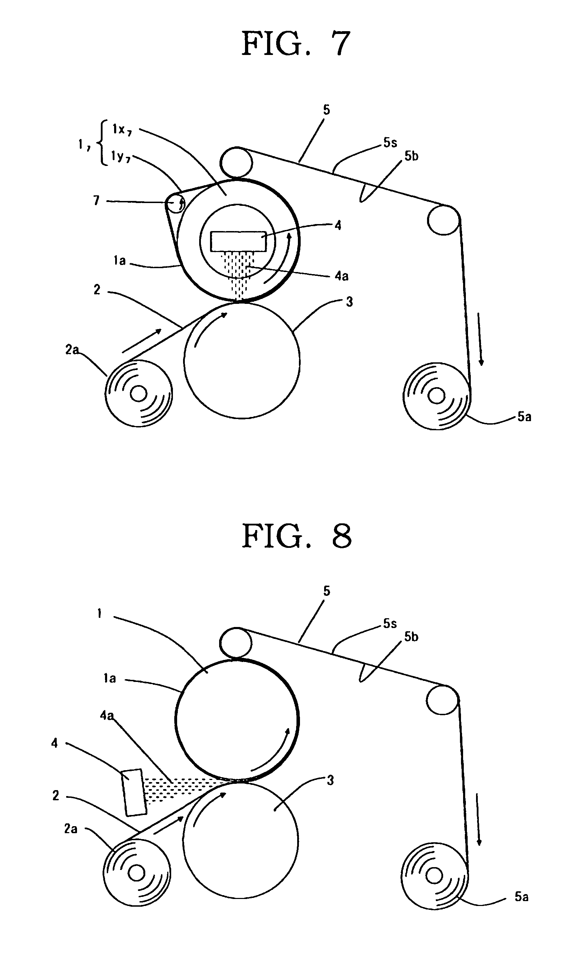

Further, as shown in a patterning apparatus illustrated in FIG. 7, it is also possible to use a patterning apparatus wherein an inner roller 1x₇ of an embossing roller 1₇ is constructed with a transparent member into a hollow cylindrical structure, and the laser source 4 is disposed inside (in the hollow of) the inner roller 1x₇ so that a laser beam 4a is emitted from the rear surface side of an elastic sleeve 1y₇ that constitutes the patterning portion 1a of the embossing roller 1₇ to heat the perimeter of the embossing roller 1₇.

Moreover, a patterning apparatus illustrated in FIG. 8 is constructed in the same manner as the patterning apparatus illustrated in FIG. 1 except that the laser source 4 is so disposed that the laser beam 4a is directly applied to the perimeter of the embossing roller 1 on the upstream side of the nip between the embossing roller and the nip roller, in the direction of rotation of the embossing roller 1.

According to the method of manufacturing an embossed sheet using the patterning apparatus illustrated in FIG. 8, since the laser beam can be applied to the perimeter of the embossing roller 1 without being passed through the nip roller 3 and the resin sheet 2, it is possible to avoid imposition of constraints on the materials of the nip roller 3 and the resin sheet 2.

It should be noted that the respective structures of the patterning apparatuses illustrated in FIGS. 1 to 8 may be used in combination or may be replaced with one another in some portions. It is also possible to add various conventionally known structures to the apparatuses to be used in the patterned resin sheet manufacturing method according to the present invention.

In the above description, while an embossed sheet patterned with minute recesses and projections is taken as an example for the patterned resin sheet, the present invention also encompasses a case of manufacturing, e.g., a patterned resin sheet provided with a large pattern having as long a side length as several centimeters.

### EXAMPLES

The present invention is described below in further detail in connection with Examples, but the present invention is not limited thereto.

### (Example 1)

An embossing roller was fabricated by winding around the surface of a cylindrical metal roller a polyimide sheet of 125 µm in thickness (trade name "Kapton" available from DuPont) that is patterned with tetragonally arrayed recesses each having a pyramid shape of 10 µm in base length and 5 µm in depth.

The embossing roller was rotated to cause a polypropylene sheet of 40 µm in thickness to pass through the nip between the embossing roller and a glass nip roller.

During the passage of the polypropylene sheet, a laser beam having a wavelength of 940 nm and an output power of 20 W was transmitted through the nip roller and the polypropylene sheet so as to be applied to the perimeter of the embossing roller in the form of a line beam having a beam shape of 10 mm x 0.3 mm, thereby pressing the perimeter of the heated embossing roller against a surface of the polypropylene sheet to continuously form thereon a pattern having a recessed and projected geometry that is oriented inversely to the pyramids provided on the polyimide sheet.

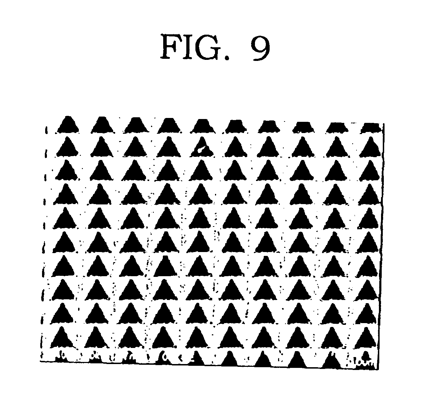

FIG. 9 shows an image captured by a scanning electron microscope of the resultant surface of the embossed sheet.

As can be seen from FIG. 9, the present invention is capable of effecting highly precise patterning.

### (Example 2)

Patterning was carried out in the same manner as in Example 1, except that the resin sheet was changed to a polyvinyl alcohol sheet of 70 µm in thickness.

Observation of the resultant surface of the embossed sheet as in Example 1 showed that highly precise patterning has been carried out as in Example 1.

### (Example 3)

Patterning was carried out in the same manner as in Example 1, except that the resin sheet was changed to a polyethylene terephthalate sheet of 50 µm in thickness, and that a laser beam of 35 W in output power was used.

Observation of the resultant surface of the embossed sheet as in Example 1 showed that highly precise patterning has been carried out as in Example 1.

As described above, the present invention is capable of effecting patterning on resin sheets of various materials through a simple technique such as adjustment of laser output, as well as of effectively exploiting input energy for the patterning in comparison with the case where the entire metal mold is heated with a electrically-heated wire and the like.

That is, according to the present invention, efficient and highly precise patterning can be implemented.

## Claims

1. A method of manufacturing a patterned resin sheet, **characterized in that** it comprises the steps of:
pressing a perimeter portion of a roller against a surface of a resin sheet with the perimeter portion heated with a laser beam, by using a patterning member that includes a roller rotatable around an axis and has a patterning portion patterned in a recessed and projected geometry on the perimeter portion of the roller, thereby forming on the surface of the resin sheet a pattern that is oriented inversely to the recessed and projected geometry of the patterning portion; and
rotating the roller to bring a portion pressed by the perimeter portion into motion, such that the pattern is continuously formed on the surface of the resin sheet.

2. The method according to claim 1, wherein the patterned resin sheet to be manufactured is an embossed sheet having on its rear surface a pattern that is oriented in the same direction as the recessed and projected geometry of the patterning portion.

3. The method according to claim 1, wherein the patterned resin sheet to be manufactured is a one-sided embossed sheet having a flat rear surface.

4. The method according to claim 3, wherein the pattern to be formed on the surface of the resin sheet is a minute pattern of not more than 10 µm in height.

5. The method according to any one of claims 1 to 4, wherein the roller is constructed to be separable into a sheet-like member constituting the patterning portion and a cylindrical base wound with the sheet-like member, the sheet-like member having on its surface the recessed and projected geometry, the sheet-like member being made of a resin having a higher melting point than the resin sheet to be patterned.

6. The method according to any one of claims 1 to 5, wherein a laser beam is emitted from the rear surface side of the resin sheet to a portion at which the roller and the resin sheet pressingly abut against each other, to apply the laser beam through the resin sheet onto the perimeter portion of the roller to heat the perimeter portion of the roller.

7. The method according to any one of claims 1 to 6, wherein the laser beam is a line beam, and the line beam is applied to the perimeter portion of the roller in such a manner that the portion irradiated with the line beam extends along a direction of the rotation axis of the roller, to heat the perimeter portion of the roller.
